# EUROPEAN PATENT SPECIFICATION

(11) **EP 0 678 714 B1**
(45) Date of publication and mention of the grant of the patent: **14.06.2000**
(21) Application number: 95302564.0
(22) Date of filing: 18.04.1995
(51) Int. Cl.: F24J 2/10

(54) **Solar energy collector of the non-evacuated compound parabolic concentrator type**
Solarkollektor ohne Vakuum mit CPC-Konzentrator
Collecteur solaire sans espace sous vide avec dispositif de concentration du type "CPC"

(30) Priority: 22.04.1994 PT 10150494
(43) Date of publication of application: 25.10.1995
(73) Proprietor: Collares Pereira, Manuel Pedro Ivens, P-1100 Lisboa (PT); Correia de Oliveira, Joao Vieira, P-2780 Oeiras (PT)
(72) Inventor: Collares Pereira, Manuel Pedro Ivens, P-1100 Lisboa (PT); Correia de Oliveira, Joao Vieira, P-2780 Oeiras (PT)
(74) Representative: MacGregor, Gordon

(56) References cited:
- AU-A- 4 062 278
- FR-A- 1 165 672
- FR-A- 2 266 753
- US-A- 4 340 034
- INTERNATIONAL JOURNAL OF SOLAR ENERGY, vol. 9, no. 1, 1 August 1990, pages 13-21, XP000177896 SHAH P K ET AL: "GEOMETRY OF IDEAL CPC COLLECTORS WITH GAP BETWEEN ABSORBER AND REFLECTOR"
- SOLAR ENERGY, vol. 25, no. 4, 1980, OXFORD, pages 335-351, XP002004276 A. RABL ET AL: "Design and test of non-evacuated solar collectors with compound parabolic concentrators"
- PATENT ABSTRACTS OF JAPAN vol. 8, no. 203 (M-326), 18 September 1984 & JP-A-59 093150 (HITACHI), 29 May 1984,

## Description

### Purpose of the invention

The purpose of the present invention is to originate a solar energy collector of the non evacuated Compound Parabolic Concentrator type, for the heating of fluid up to 120°C, totally stationary, collecting both diffuse and direct (beam) solar radiation, whose efficiency is higher than the one of presently existing collectors and can be produced at costs equal if not lower than the costs of the collectors used today for the same applications.

This goal is achieved today by the present invention, through a new configuration of the reflecting surface and of the absorbers, a new relative positioning of the said surface and said absorbers and of the insulation in the box containing them all.

### Prior Art

Collectors of the type described in this invention, i.e. CPC, Ideal or Winston type collectors, are described for instance in US-A-3,923,321, US-A-3,957,031, US-A-4,003,638, US-A-4,230,095 and PT-A-80 405 (expired), patents which constitute the prior art most related to the present invention.

However US-A-4,003,638 and US-A-4,230,095 and the PT-A-80 405, are the ones closer to the present invention, deserving an explanation of the differences between the collector of the present invention and the similar ones belonging to each one of them.

In US-A-4,003,638 the collectors do not foresee (see claims of this patent) the configuration of the absorber being an inverted "V"-shape, and thus, also does not foresee the particular combination of arcs of parabola and involute of the present invention.

In US-A-4,230,095 the claims are on an absorber with a gap towards the reflecting surface, presenting optical configurations always associated with optical losses. On the contrary, the present invention presents a solution in which the gap between the mirror (reflecting surface 9 and then absorber does not result in any optical losses. On the other and in all of the claims of US-A-4,230,095 the absorber is always surrounded by a transparent envelope, positioned between itself and the mirror. In the present invention no envelope of this kind is considered.

In PT-A-80 405, the configuration of the optical cavity and the distance between the mirror and the absorber considered, are similar to the ones described in US-A-4,230,095, thus very different from the ones in the present invention (see explanation above). As it will be shown ahead, the geometry of the absorber is tubular, thus different from the geometry of the inverted "V" fin of the present invention, the tubes for fluid circulation not being directly illuminated and allowing for the placement of a double cover in the collector of the present invention, that would be impossible in the collector described in PT-A-80 405.

US-A-4340034 discloses a solar energy non-evacuated CPC type collector, for the heating of fluids to temperatures up to 120°C, comprising:
a rectangular box whose height is smaller than its width and length, having a bottom, a top made of transparent sheet material, and four sides having a rigid profile sealed to the top by the interposition of a resilient gasket squeezed against the rigid profile by a further rigid profile,
the box containing a plate of rigid insulating material directly in contact with the inner surface of the bottom, the top surface of the plate being covered by a reflecting sheet forming a reflecting surface configured by several elongate troughs, each of which is defined between two spaced planes parallel to the bottom, a lower of the planes being within the plate and an upper of the planes extending through the top of the trough,
each trough having, as viewed in cross-section, left and right sides which are mirror images of each other, each side being defined by a curve starting at a point of said upper plane and defining a parabolic arc from the starting point, the curve extending to the lower plane and then extending back towards the upper plane, the curve of the left side meeting the curve of the right side at a meeting point,
an absorber extending longitudinally and centrally within each respective trough, each absorber consisting of a fin of inverted "V" cross-section, coated on both sides and positioned to prevent optical losses, the absorber including a tube for containing fluid to be heated, extending along the fin.

The present invention is characterised in that each curve has the shape of an arc of a circle between the parabolic arc and the meeting point, the arc of a circle extending to both sides of the bottom of the curve,
the meeting point is located on a line between the ends of inverted "V" of the fin; and
the tube is located on the side of the fin at its side facing the reflecting surface of the sheet.

The described embodiment has the following features:-
1) use of CPC type optics, obtained from a reflecting surface and from a set of absorbing elements with an inverted "V" shape, with a gap between the said reflecting surface and said absorbing elements, sufficient to reduce thermal losses resulting from thermal short circuits, and without the optical losses normally associated with that gap;
2) illumination of the whole absorbing surface, either directly or after reflection on the shaped reflecting surface (mirror), with a minimal amount of material and the use of the whole absorbing surface
3) the usage of a set of fins, preferably in aluminum or copper, with a coating of the selective type, as an absorbing medium, C times smaller than the cover surface (useful surface of the transparent sheet material, i.e. the one corresponding to the length of the fins), C being the geometrical concentration factor, i.e., the ratio between the cover area to the absorber area, in contrast with flat plate collectors where C=1; the "V" form of the fins solves two problems: counters the tendency for the fin to sag (which would damage the optical performance) and creates a barrier for air convection inside the collector box, making thermally better;
4) the usage of a "V" shaped fin with an angle 2β, with beta preferably between 45 and 90°;
5) the usage of the relative positions of the reflecting surface and of the absorbing elements, as to obtain acceptance angles θa, such that β ≤ θ a or β ≥ θa, preferably acceptance angles allowing for a stationary operation, either with the fins longitudinal axis oriented E.W. or N.S., this last orientation being particularly important for collector thermosyphon operation;
6) the usage of distances from the lower surface of said transparent material sheet to the plane defined by the bottom of said troughs, in such a way as to reduce losses by convection;

### Brief description of the drawings

The present invention will now be described with greater detail, through a specific example of production of the same, with reference to the annexed drawings, where:
Fig. 1 shows a schematic perspective and partial cut of a collector according to the invention, and a detail in cross section of the frame and sealing of the box profile,
Fig. 2 shows a configuration in schematic cross section of a trough for β ≥ θa,
Fig. 3a and 3b show, respectively, the configuration in cross section, of one of the outer most troughs and of a central trough of the reflecting surface of the invention, obtain after truncation of the trough in fig. 2,
Fig. 4 shows the schematic configuration in cross section of an outer most valley for β ≤ θa,
Fig. 5a and 5b show, respectively, the configuration in cross section of an outer most trough and of a central trough of the reflecting surface of the present invention,
Fig. 6 shows schematically the hidraulic circuit of the collector of the present invention and a detail of the right hand side of the present invention,
Fig. 7 represents another realization of the present invention, different from the one in Figs. 1 to 6, because of the usage of a second cover, a thin and transparent teflon like material, preferably teflon.

### Description of the preferred embodiment of the invention

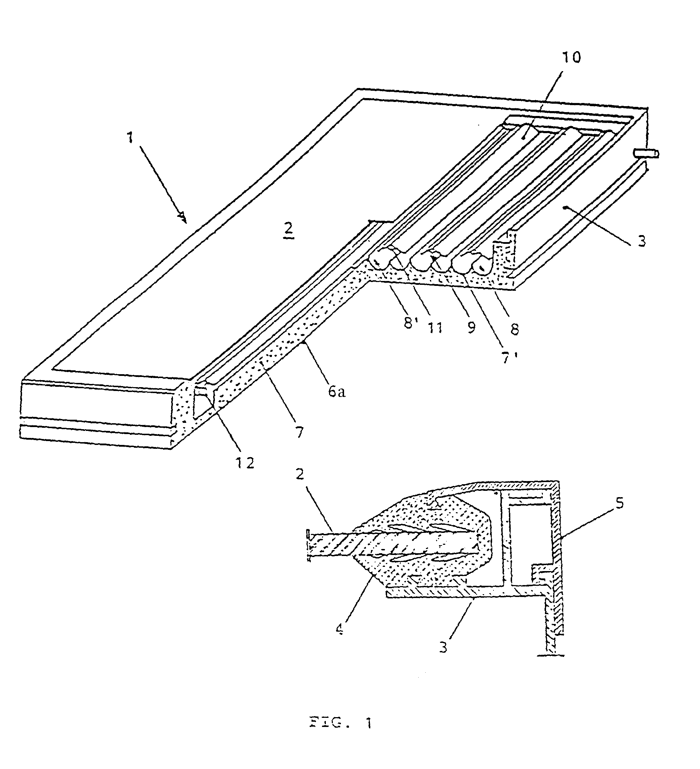

As can be seen in Fig. 1, the collector according to the present invention is, generically, constituted by a rectangular box 1, with an height smaller than the other two dimensions (length and width) the top 2 of said box being of tempered glass plate with low iron content, whose frame 3 (the four side walls of the box) being formed by a rigid profile of anodized aluminum, sealed, with respect to the top 2, by the interposition of a EPDM rubber gasket (a monomer of ethylenepropylenediene) 4, solidly connected to the rigid profile with the help of another rigid profile also in anodized aluminum 5, and with the bottom of said box 1, formed by a U.V.resistant PVC sheet.

Inside the box there is a plate 7 of rigid polyurethane foam, directly in contact with the inner surface of the bottom sheet 6a and with its top surface, forming a reflecting surface 7', shaped in seven longitudinal troughs 8,8', with its configuration described ahead. The reflecting surface 7' is formed with an aluminum (or silver) sheet. At the tops of the troughs 8,8' an aluminum (or silver) sheet is placed in order to reduce the end effects which result from the projection of shadows, when solar rays are not incident within the meridian plane.

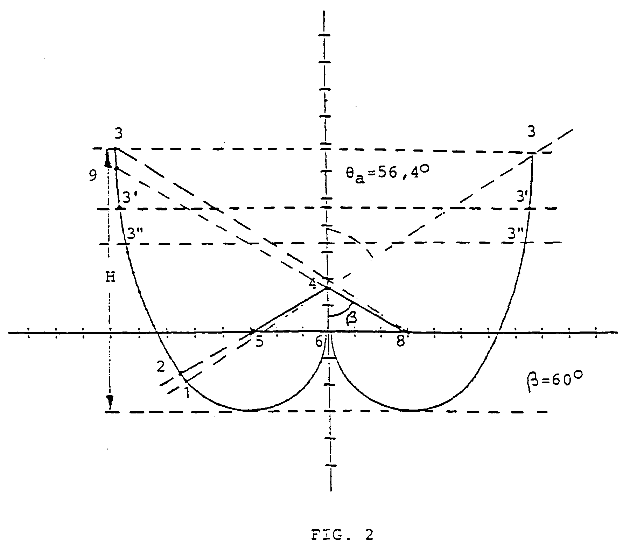

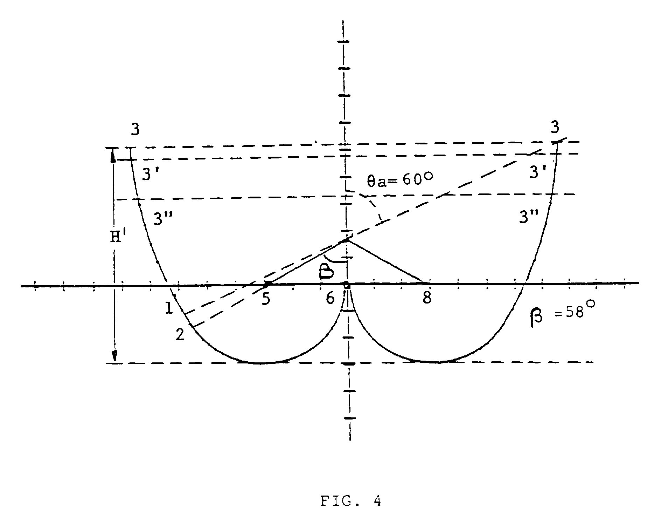

The configuration of the 8, 8' troughs is defined, from the truncation point, by the lines 3'-3' and 3"-3" of the trough with bottom height H or H', represented in cross section in Figs. 2 and 4, which present acceptance angles of 56.4 and 60°, with their shape defined by a line whose left side (left half trough) is the mirror image of its right hand side (right half trough) the description of the two left parts being the following:
Fig. 2
   From 6 to 1 an arc of a circle of radius 56;
   From 1 to 2 an arc of a parabola with focus on 5 and axis containing the segment 1-5;
   From 2 to 9 an arc of a parabola of focus on 4 and axis containing segment 1-5;
   From 9 to 3 an arc of a parabola with focus in 8 and axis parallel to 1-5.
Fig. 3
   From 6 to 1 an arc of a circle of radius 5-6 and center in 5;
   From 1 to 2 an of a circle with center in 4 and radius 4-1;
   From 2 to 3 an arc of a parabola with focus in 4 and axis containing the segment 2-5.

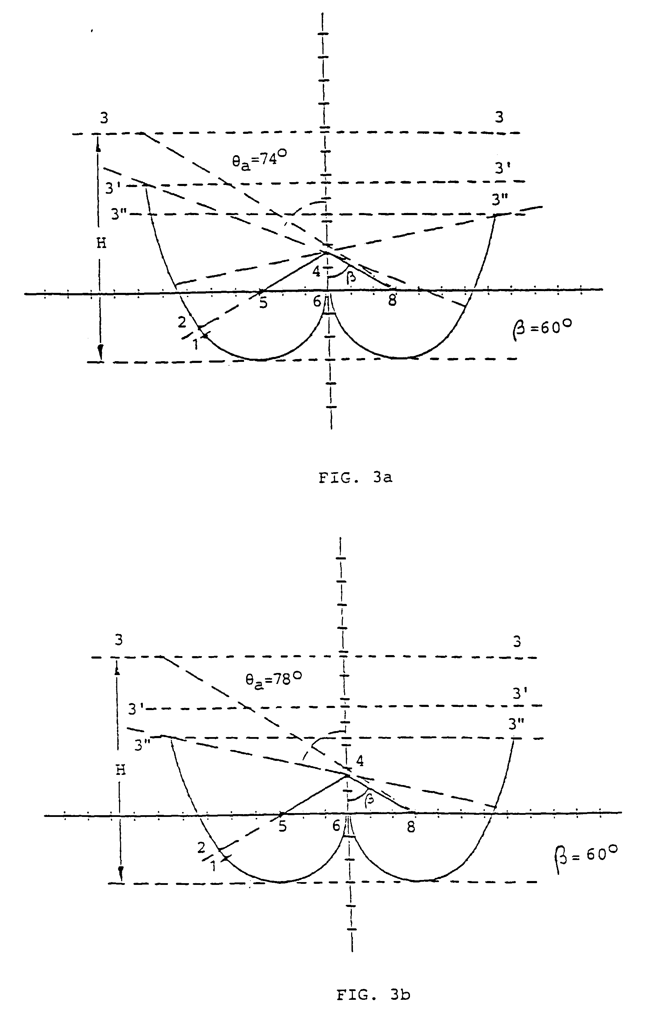

Fig. 3a is the representation of outer most left trough 8, the right most trough on the right side being the mirror image of this one, the half outer most left (right) trough truncated to an height varying between 0.70H and 1.00H (truncation at 3'-3' in fig. 2) and presenting an acceptance angle θa = ±74°, and its half central left (right) trough, truncated to an height varying from 0.6H and 0.7H (truncation at 3"-3" of fig. 2), and presenting an acceptance angle θa = ±78°

In Fig. 3b is represented one of the five troughs 8' (central troughs), which is truncated to a height varying between 0.6H and 0.70H, and its half troughs (both left and right) correspond to acceptance angles of θa = ±78.

In correspondence with each one of the said troughs 8 and 8', along their length and in their central region, lies an absorber 9 consisting of an inverted "V" shaped fin, selectively coated with a "black nickel" type coating, on both sides, and whose vertex is on the symmetry line of the troughs, at an height that varies between 0.30H and 0.60H. An inner copper tube 11 is positioned, running longitudinally in the center of the said fin, and on the side towards the reflecting surface, which prolongs itself beyond the said fin connecting on both sides to larger entrance and exit tubes 12 (headers)

Fig. 5a represents the outer most left trough, the outer most right one being its mirror image, its lateral right (left) half trough, truncated at an height which varies between 0.70H and 1.00H (truncation at 3'-3' of Fig. 4) and presenting an acceptance angle corresponding to θa=±74°, and its half center trough (half right center trough), truncated at an height which varies from 0.60H 0.70H (truncation at 3"-3"of Fig. 4) and presenting an acceptance angle of θa = ±78°.

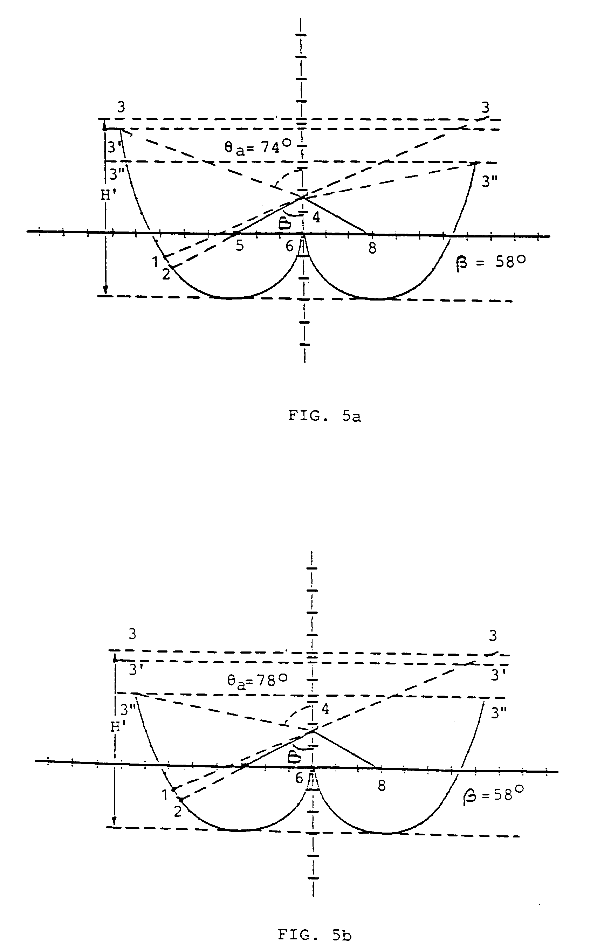

Fig. 5b represents one of the five central troughs, truncated to an height varying between 0.60H and 0.70H, and its half troughs, both left and right, with acceptance angles of θa= ±78°.

In correspondence with each one of the said troughs 8 and 8', along their length and in its central region has, lies an absorber 9, consisting of a fin 10, with an inverted "V" shape, selectively coated with a "black nickel" type surface coating, on both sides and whose vertex is placed on the symmetry line of the troughs, at an height which varies between 0.30H' and 0.60H'. There is, running longitudinally at the center of the fin and on the side facing the reflecting surface, an inner copper tube 11 for the fluid to be heated, which extends beyond the fins, connecting on both sides to larger entrance and exit copper tubes (headers) 13.

In the particular embodiment of Fig.2,3a and 3b, the "V" of the fins represents an angle of 120°, that is β = 60°. The choice of these values corresponds to a final concentration C=1.2, itself corresponding to an optimization of the average energy collected on an yearly basis, compatible with fully stationary operation in E.W. or N.S. orientation. The values chosen are a particular case of the family of solutions for which β > θa (before truncation).

The values of θa and β chosen for the embodiment of the present invention, correspond to an optimization reflecting the costs of materials, production costs and collected energy. However fluctuations in those costs, may, in the future, determine embodiments of the present invention where it will be more interesting to have β < θa.

In the embodiment of Figs. 4, 5a and 5b the collector, although similar, has a slightly different composition of arcs of parabola and circumference. In this case the aspects connected to truncation are treated identically.

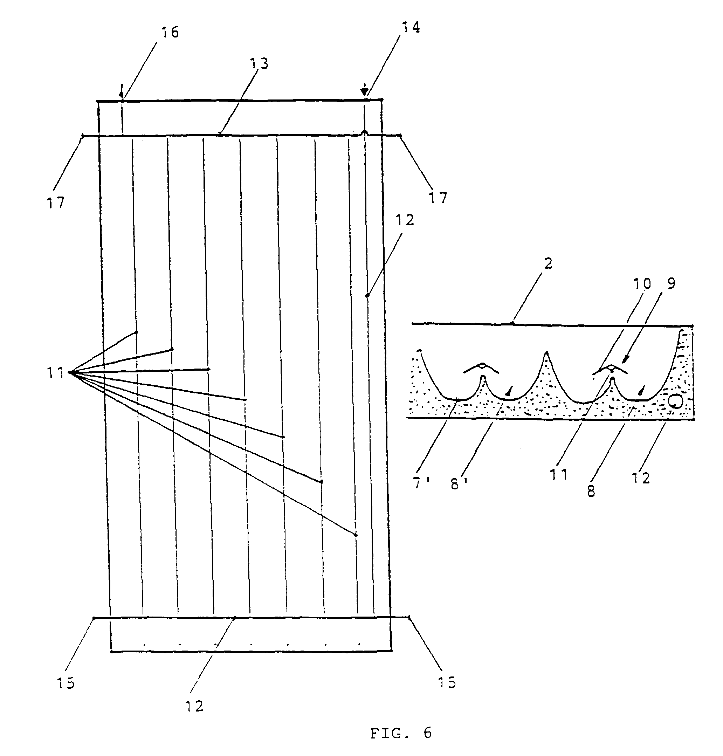

Fig. 6 represents the hydraulic circuit, and has can be seen in the right hand side detail of this figure, each trough has an absorber with an inverted "V" shape- an aluminum fin-with an inner copper tube 11, placed at its vertex, inside which circulates the fluid to be heated. Each one of the said copper tubes 11 is connected, extending beyond the fins, to entrance and exit copper tubes, on each side forming a grid.

Thus solar energy, coming directly to the fin or reflected by the reflecting surface, is concentrated on the said fins 10, and transferred to the fluid circulating inside the copper tubes 11 and in the headers (12 and 13), heating the fluid, which came in colder than it exits. The in and outlet pipes 14,15,16,17, allow for a very flexible connection between different collectors (boxes).

With the embodiment of the present invention described a stagnation temperature above ambient was measured of at least 165°C.

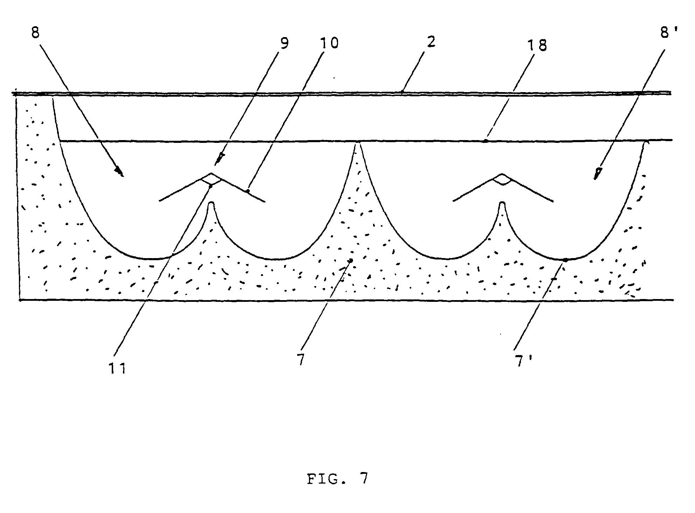

In fig 7 another embodiment of the present invention is shown, with an extra cover, a transparent thin film, preferably of teflon 18, laid tangential to the tops of the central troughs, in order to reduce convective losses, thus improving the efficiency of the collector. A stagnation temperature of at least 185°C above ambient temperature was measured for this double cover embodiment

## Claims

1. Solar energy non-evacuated CPC type collector, for the heating of fluids to temperatures up to 120°C, comprising:
a rectangular box (1) whose height is smaller than its width and length, having a bottom (6a), a top (2) made of transparent sheet material, and four sides having a rigid profile sealed to the top (2) by the interposition of a resilient gasket (4) squeezed against the rigid profile by a further rigid profile (5),
the box containing a plate (7) of rigid insulating material directly in contact with the inner surface of the bottom (6a), the top surface of the plate (7) being covered by a reflecting sheet forming a reflecting surface (7') configured by several elongate troughs (8,8'), each of which is defined between two spaced planes parallel to the bottom (6a), a lower of the planes being within the plate (7) and an upper of the planes extending through the top of the trough,
each trough having, as viewed in cross-section, left and right sides which are mirror images of each other, each side being defined by a curve starting at a point of said upper plane and defining a parabolic arc (1-3) from the starting point, the curve extending to the lower plane and then extending back towards the upper plane, the curve of the left side meeting the curve of the right side at a meeting point (6),
an absorber (9) extending longitudinally and centrally within each respective trough (8,8'), each absorber (9) consisting of a fin (10) of inverted "V" cross-section, coated on both sides and positioned to prevent optical losses, the absorber including a tube (11) for containing fluid to be heated, extending along the fin (10),
characterised in that:
each curve has the shape of an arc of a circle (1-6) between the parabolic arc (1-3) and the meeting point (6), the arc of a circle (1-6) extending to both sides of the bottom of the curve,
the meeting point (6) is located on a line (5-8) between the ends of inverted "V" of the fin (10); and
the tube (11) is located on the side of the fin (10) at its side facing the reflecting surface of the sheet (7).

2. A collector according to Claim 1, characterised in that there are seven troughs, the two outer most troughs (8) are mirror images of each other and each has its outer half trough truncated to a height varying between 0.70H and 1.00H, and its inner half trough, as well as the half troughs of all other troughs, being truncated to a height lying between 0.60H and 0.70H.

3. A collector according to Claim 1, characterised by the angle "V" of each absorbing fin (10) being between 90 and 180° with its vertex placed on the line of symmetry of the troughs at a height varying between 0.30H to 0.60H.

4. A collector according to Claim 3, wherein said angle is 120°.

5. A collector according to Claims 3 or 4 characterised in that the two outer most half troughs have acceptance angles Θa = ±74, and all other half troughs have acceptance angles Θa = ±78°.

6. A collector according to any one of the previous claims characterised by the ends of the troughs having a reflecting sheet to reduce the end effects resulting from shadows cast when solar rays are incident outside the meridian plane.

7. A collector according to any of the previous claims, characterised by said top (2) being made of a tempered glass sheet with low iron content.

8. A collector according to any of the previous claims, characterised in that the fin (10) is made out of aluminium and the tube (11) of copper, with their surfaces coated with a selective coating of the "black nickel" type.

9. A collector according to any of the previous claims, characterised by the said insulation plate (7) being made of polyurethane foam.

10. A collector according to any of the previous claims, characterised by the said bottom (6a) of the box (1) being made of a sheet of U.V. resistant rigid PVC.

11. A collector, according to any of the previous claims, characterised by a second cover (18) in the form of a transparent film being placed inside the box (1), between the top (2) and the reflecting surface (7').

## Patentansprüche

1. Nicht evakuierter Solarenergiekollektor vom CPC-Typ zur Erhitzung von Flüssigkeiten auf Temperaturen bis zu 120°C, enthaltend:
- einen rechteckigen Kasten (1), dessen Höhe kleiner als seine Breite und Länge ist, mit einem Boden (6a), einem aus einem transparenten plattenförmigen Material hergestellten Deckel (2) und vier Seiten mit einem starren Profil, welches durch die Zwischenschaltung einer elastischen Dichtung (4), die durch ein weiteres starres Profil (5) gegen das starre Profil gepresst wird, gegenüber dem Deckel (2) abgedichtet ist,
- wobei der Kasten eine Platte (7) eines festen Isoliermaterials enthält, welches direkt in Kontakt zur inneren Oberfläche des Bodens (6a) steht, wobei die obere Oberfläche der Platte (7) von einer reflektierenden Lage bedeckt ist, die eine reflektierende Oberfläche (7') bildet und die durch mehrere längliche Rinnen (8, 8') konfiguriert wird, von denen jede zwischen zwei beabstandeten Ebenen parallel zum Boden (6a) definiert wird, wobei eine untere der Ebenen innerhalb der Platte (7) ist und eine obere der Ebenen sich durch die Oberseite der Rinne erstreckt,
- wobei jede der Rinnen im Querschnitt gesehen linke und rechte Seiten hat, welche Spiegelbilder voneinander sind, wobei jede Seite durch eine Kurve definiert wird, die an einem Punkt der genannten oberen Ebene beginnt und vom Startpunkt aus einen parabolischen Bogen (1-3) bildet, wobei sich die Kurve zur unteren Ebene und dann zurück in Richtung der oberen Ebene erstreckt, wobei die Kurve der linken Seite die Kurve der rechten Seite an einem Treffpunkt (6) trifft,
- einen Absorber (9), welcher sich jeweils in einer Rinne (8, 8') zentral längserstreckt, wobei jeder Absorber (9) aus einer Rippe (10) von invertiertem "V"-Querschnitt besteht, welche auf beiden Seiten beschichtet und zur Verhinderung optischer Verluste positioniert ist, wobei der Absorber eine Röhre (11) aufweist, welche die zu erhitzende Flüssigkeit enthält und sich entlang der Rippe (10) erstreckt,
dadurch gekennzeichnet, dass
- jede Kurve zwischen dem parabolischen Bogen (1-3) und dem Treffpunkt (6) die Form eines Kreisbogens (1-6) hat, wobei sich der Kreisbogen (1-6) nach beiden Seiten des Tiefpunktes der Kurve erstreckt,
- der Treffpunkt (6) auf einer Linie (5-8) zwischen den Enden des invertierten "V" der Rippe (10) angeordnet ist; und
- die Röhre (11) auf der Seite der Rippe (10) angeordnet ist, die der reflektierende Oberfläche der Lage (7) gegenüber steht.

2. Kollektor nach Anspruch 1,
dadurch gekennzeichnet, dass es sieben Rinnen gibt, wobei die zwei äußersten Rinnen (8) Spiegelbilder voneinander sind und jede ihre äußere Halbrinne auf einer Höhe abgeschnitten hat, welche zwischen 0.70 H und 1.00 H variiert, und ihre inneren Halbrinnen ebenso wie die Halbrinnen aller anderen Rinnen auf einer Höhe abgeschnitten sind, die zwischen 0.60 H und 0.70 H liegt.

3. Kollektor nach Anspruch 1,
dadurch gekennzeichnet, dass der Winkel des "V" jeder Absorptionsrippe (10) zwischen 90° und 180° beträgt, wobei sein Scheitelpunkt auf der Symmetrielinie der Rinnen in einer Höhe angeordnet ist, die zwischen 0.30 H und 0.60 H variiert.

4. Kollektor nach Anspruch 3,
wobei der genannte Winkel 120° beträgt.

5. Kollektor nach Anspruch 3 oder 5,
dadurch gekennzeichnet, dass die beiden äußersten Halbrinnen Öffnungswinkel θa = ± 74° und alle anderen Halbrinnen Öffnungswinkel θa = ± 78° haben.

6. Kollektor nach einem der vorangegangenen Ansprüche,
dadurch gekennzeichnet, dass die Enden der Rinnen eine reflektierende Lage aufweisen zur Reduzierung der Endeffekte, welche aus Schatten resultieren, wenn Sonnenstrahlen von außerhalb der Meridianebene einfallen.

7. Kollektor nach einem der vorangegangenen Ansprüche,
dadurch gekennzeichnet, dass der genannte Deckel (2) aus einer vergüteten Glasscheibe mit einem geringen Eisengehalt hergestellt ist.

8. Kollektor nach einem der vorangegangenen Ansprüche,
dadurch gekennzeichnet, dass die Rippe (10) aus Aluminium und die Röhre (11) aus Kupfer hergestellt ist, wobei deren Oberflächen mit einer selektiven Beschichtung vom Typ des Schwarznickels beschichtet sind.

9. Kollektor nach einem der vorangegangenen Ansprüche,
dadurch gekennzeichnet, dass die genannte Isolierungsplatte (7) aus einem Polyurethanschaum hergestellt ist.

10. Kollektor nach einem der vorangegangenen Ansprüche,
dadurch gekennzeichnet, dass der genannte Boden (6a) des Kastens (1) aus einer Platte aus UV-resistentem starren PVC hergestellt ist.

11. Kollektor nach einem der vorangegangenen Ansprüche,
dadurch gekennzeichnet, dass eine zweite Abdeckung (18) in Form eines transparenten Filmes in dem Kasten (1) zwischen dem Deckel (2) und der reflektierenden Oberfläche (7') angeordnet ist.

## Revendications

1. Collecteur d'énergie solaire du type CPC non sous vide, destiné au chauffage de fluides jusqu'à des températures pouvant atteindre 120 °C, comprenant :
- une boîte rectangulaire (1) dont la hauteur est inférieure à la largeur et à la longueur, comportant un fond (6a), un dessus (2) fait d'un matériau en feuille transparente, et quatre côtés dont le profil rigide est scellé au dessus (2) par interposition d'un joint élastique d'étanchéité (4) serré contre le profil rigide par un autre profil rigide (5),
- la boîte contenant une plaque (7) faite d'un matériau isolant rigide directement en contact avec la surface inférieure du fond (6a), la surface supérieure de la plaque (7) étant couverte par une feuille réfléchissante (7) configurée par plusieurs auges allongées (8, 8'), dont chacune est définie entre deux plans espacés parallèles au fond (6a), un plan inférieur étant dans la plaque (7) et un plan supérieur s'étendant à travers le dessus de l'auge,
- chaque auge ayant, vue en coupe, des côtés gauche et droit qui sont des images réfléchies l'une de l'autre, chaque côté étant défini par une courbe démarrant à un point dudit plan supérieur et définissant un arc de parabole (1-3) à partir du point de départ, la courbe s'étendant au plan inférieur et revenant ensuite vers le plan supérieur, la courbe du côté gauche rencontrant la courbe du côté droit à un point de rencontre (6),
- un absorbeur (9) s'étendant longitudinalement et au centre dans chaque auge respective (8, 8'), chaque absorbeur (9) consistant en une ailette (10) de section transversale en "V" inversé, revêtue des deux côtés et positionnée pour empêcher des pertes optiques, l'absorbeur comprenant un tube (11) destiné à contenir un fluide à chauffer, s'étendant le long de l'ailette (10),
caractérisé en ce que :
- chaque courbe à la forme d'un arc de cercle (1-6) entre l'arc de parabole (1-3) et le point de rencontre (6), l'arc de cercle (1-6) s'étendant des deux côtés du bas de la courbe,
- le point de rencontre (6) est situé sur une ligne (5-8) entre les extrémités du "V" inversé de l'ailette (10) ; et
- le tube (11) est situé sur le côté de l'ailette (10) sur son côté dirigé vers la surface réfléchissante de la feuille (7).

2. Collecteur selon la revendication 1, caractérisé en ce qu'il y a sept auges, les deux auges (8) les plus extérieures étant des images réfléchies l'une de l'autre et ayant chacune sa demi-auge extérieure tronquée à une hauteur variant entre 0,70H et 1,00H, et sa demi-auge intérieure, ainsi que les demi-auges de toutes les autres auges, étant tronquée à une hauteur comprise entre 0,60H et 0,70H.

3. Collecteur selon la revendication 1, caractérisé en ce que l'angle "V" de chaque ailette absorbante (10) est compris entre 90 et 180°, son sommet étant placé sur la ligne de symétrie des auges à une hauteur variant entre 0,30H et 0,60H.

4. Collecteur selon la revendication 3, dans lequel ledit angle est de 120°.

5. Collecteur selon les revendication 3 ou 4, caractérisé en ce que les deux demi-auges les plus extérieures ont des angles d'acceptation Θa = ±74°, et toutes les autres demi-auges ont des angles d'acceptation Θa = ± 78°.

6. Collecteur selon l'une quelconque des revendications précédentes, caractérisé en ce que les extrémités des auges ont une feuille réfléchissante pour réduire les effets d'extrémités résultant d'ombres portées lorsque des rayons solaires tombent en dehors du plan méridien.

7. Collecteur selon l'une quelconque des revendications précédentes, caractérisé en ce que ledit dessus (2) est fait d'une feuille de verre trempé de faible teneur en fer.

8. Collecteur selon l'une quelconque des revendications précédentes, caractérisé en ce que l'ailette (10) est en aluminium et le tube (11) en cuivre, leurs surfaces étant couvertes d'un même revêtement sélectif du type "nickel noir".

9. Collecteur selon l'une quelconque des revendications précédentes, caractérisé en ce que ladite plaque d'isolement (7) est en mousse de polyuréthane.

10. Collecteur selon l'une quelconque des revendications précédentes, caractérisé en ce que ledit fond (6a) est fait d'une feuille de PVC rigide résistant aux rayons ultraviolets.

11. Collecteur selon l'une quelconque des revendications précédentes, caractérisé en ce qu'un deuxième couvercle (18) sous forme de film transparent est placé à l'intérieur de la boîte (1), entre le dessus (2) et la surface réfléchissante (7').
